# EUROPÄISCHE PATENTSCHRIFT

(11) **EP 2 769 594 B1**
(45) Veröffentlichungstag und Bekanntmachung des Hinweises auf die Patenterteilung: **18.05.2016**
(21) Anmeldenummer: 12751005.5
(22) Anmeldetag: 11.08.2012
(51) Int. Cl.: H04W 88/04, H04W 84/18, H04W 76/02

(54) **CAR-2-X-KOMMUNIKATIONSSYSTEM, TEILNEHMER IN EINEM SOLCHEN SYSTEM UND VERFAHREN ZUM EMPFANGEN VON FUNKSIGNALEN IN EINEM SOLCHEN SYSTEM**
CAR-2-X COMMUNICATION SYSTEM, PARTICIPANT IN SUCH A SYSTEM AND METHOD FOR RECEIVING OF RADIO SIGNALS IN SUCH A SYSTEM
SYSTEME DE COMMUNICATION CAR-2-X, PARTICIPANT DANS UN TEL SYSTEME ET PROCEDE POUR RECEPTIONNER DES SIGNALS DE RADIO DANS UN TEL SYSTEME

(30) Priorität: 20.10.2011 DE 102011116637
(43) Veröffentlichungstag der Anmeldung: 27.08.2014
(73) Patentinhaber: Audi AG, 85045 Ingolstadt (DE)
(72) Erfinder: KRATZSCH, Claudia, 85055 Ingolstadt (DE); BAIRLEIN, Wilhelm, 86643 Rennertshofen (DE); PANDEY, Mohinder, 85051 Ingolstadt (DE)
(86) Internationale Anmeldenummer: PCT/EP2012/003441
(87) Internationale Veröffentlichungsnummer: WO 2013/056760

(56) Entgegenhaltungen:
- US-A1- 2004 203 706
- EBNER A ET AL: "Information Dissemination in Self-Organizing Intervehicle Networks", IEEE TRANSACTIONS ON INTELLIGENT TRANSPORTATION SYSTEMS, IEEE, PISCATAWAY, NJ, USA, Bd. 6, Nr. 1, 1. März 2005 (2005-03-01), Seiten 90-101, XP011127531, ISSN: 1524-9050, DOI: 10.1109/TITS.2004.842407

## Beschreibung

Die Erfindung betrifft ein Car-2-X-Kommunikationssystem gemäß dem Oberbegriff des Anspruchs 1, Teilnehmer in einem Car-2-X-Kommunikationssystem und ein Verfahren zum Empfangen von Funksignalen in einem Car-2-X-Kommunikationssystem gemäß dem Oberbegriff des Anspruchs 12.

US2004/203706 A1 offenbart ein car-2-X-Kommunikationssystem mit mindestens zwei Teilnehmern die jeweils Kommunikationseinheiten zum Empfangen und Senden von Nachrichten umfassen, wobei ein erster Teilnehmer seine Empfangsqualität eines Funksignals überwacht, und wenn die Qualität zu niedrig ist, eine Verbindung über einen anderen Teilnehmer erstellt.

Im Stand der Technik sind derartige Systeme, Teilnehmer und Verfahren beispielsweise von dem Car-2-X-Netzwerk bekannt, für das das ETSI (kurz für "European Telecommunications Standards Institute") Standards und Spezifikationen erarbeitet. Bei diesem bekannten Netzwerk sind als Teilnehmer sowohl Kraftfahrzeuge als auch Infrastrukturstationen, die stationär und beispielsweise wie Ampelanlagen am Straßenrand installiert sind, vorgesehen. Diese Fahrzeuge umfassen neben der Kommunikationseinheit für die Kommunikation mit anderen Teilnehmern des Netzwerks auch ein Autoradio.

Falls ein derartiges Fahrzeug durch ein Gebiet, beispielsweise einen Tunnel oder Wald, fährt, in dem ein direkter Antennenempfang des Funksignals des in dem Autoradio eingestellten Radiosenders nur schlecht oder gar nicht möglich und somit die Empfangsqualität dieses Funksignals schlecht ist, kann der Fahrer durch Rauschen und sonstige Störgeräusche sowie durch Tonausfall gestört und verärgert werden.

Die Aufgabe der Erfindung besteht darin, den Empfang von Funksignalen in einem Car-2-X-Kommunikationssystem zu verbessern.

Diese Aufgabe wird durch ein Car-2-X-Kommunikationssystem gemäß Anspruch 1, einen Teilnehmer in einem Car-2-X-Kommunikationssystem gemäß Anspruch 10, einen Teilnehmer in einem Car-2-X-Kommunikationssystem gemäß Anspruch 11 und ein Verfahren zum Empfangen von Funksignalen in einem Car-2-X-Kommunikationssystem gemäß Anspruch 12 gelöst. Weitere Ausführungsformen sind in den Unteransprüchen beschrieben.

Die Erfindung schlägt gemäß einem ersten Aspekt ein Car-2-X-Kommunikationssystem vor, umfassend
- wenigstens zwei Teilnehmer;
   wobei
- ein erster Teilnehmer umfasst
   - eine erste Kommunikationseinheit zum Empfangen von Nachrichten aus dem Kommunikationssystem und zum Senden von Nachrichten in das Kommunikationssystem;
   - einen ersten Funkempfänger zum Empfangen von Funksignalen;
- ein zweiter Teilnehmer umfasst
   - eine zweite Kommunikationseinheit zum Empfangen von Nachrichten aus dem Kommunikationssystem und zum Senden von Nachrichten in das Kommunikationssystem;
   - einen zweiten Funkempfänger zum Empfangen von Funksignalen; wobei
- die Funksignale Rundfunksignale oder Mobilfunksignale oder Satellitennavigationssignale sind;
- der erste Teilnehmer weiter umfasst
   - eine erste Steuereinheit, die an die erste Kommunikationseinheit und den ersten Funkempfänger gekoppelt ist;
- die erste Steuereinheit derart ausgebildet ist, dass sie
   - eine erste Empfangsqualität eines vom ersten Funkempfänger empfangenen Funksignals überwacht;
   - falls die erste Empfangsqualität kleiner als ein vorbestimmter erster Schwellenwert ist, eine Anforderungsnachricht, die eine Übertragung von Funksignalen über das Kommunikationssystem anfordert, erzeugt und mit Hilfe der ersten Kommunikationseinheit in das Kommunikationssystem sendet;
   - falls die erste Kommunikationseinheit von dem zweiten Teilnehmer eine Angebotsnachricht, die eine zweite Empfangsqualität eines vom zweiten Teilnehmer empfangenen Funksignals enthält, empfängt, auf Grundlage dieser Angebotsnachricht den zweiten Teilnehmer als Partner auswählt oder nicht;
   - falls der zweite Teilnehmer als Partner ausgewählt ist, eine Antwortnachricht, die eine Verbindung mit dem Partner über das Kommunikationssystem zur Übertragung des vom Partner empfangenen Funksignals ankündigt, erzeugt und mit Hilfe der ersten Kommunikationseinheit an den Partner sendet;
   - mit Hilfe der ersten Kommunikationseinheit die Verbindung mit dem Partner aufbaut;
   - das übertragene Funksignal an den ersten Funkempfänger leitet und diesen anweist, das von ihm empfangene Funksignal durch dieses zu ersetzen;
- der zweite Teilnehmer weiter umfasst
   - eine zweite Steuereinheit, die an die zweite Kommunikationseinheit und den zweiten Funkempfänger gekoppelt ist;
- die zweite Steuereinheit derart ausgebildet ist, dass sie
   - die zweite Empfangsqualität überwacht;
   - falls die zweite Kommunikationseinheit von dem ersten Teilnehmer die Anforderungsnachricht empfängt und falls die zweite Empfangsqualität größer gleich einem vorbestimmten zweiten Schwellenwert ist, die Angebotsnachricht mit Hilfe der zweiten Kommunikationseinheit an den ersten Teilnehmer sendet;
   - falls die zweite Kommunikationseinheit die Antwortnachricht empfängt, mit Hilfe der zweiten Kommunikationseinheit die Verbindung mit dem ersten Teilnehmer aufbaut und das vom zweiten Funkempfänger empfangene Funksignal an den ersten Teilnehmer überträgt.

Da das von dem zweiten Funkempfänger empfangene, übertragene Funksignal im Vergleich zu dem vom ersten Funkempfänger empfangenen Funksignal eine bessere Empfangsqualität hat, wird der Empfang von Funksignalen im Car-2-X-Kommunikationssystem verbessert.

Der erste Teilnehmer kann beispielsweise einer der vorgeschlagenen Teilnehmer gemäß dem zweiten Aspekt der Erfindung sein, und der zweite Teilnehmer kann beispielsweise einer der vorgeschlagenen Teilnehmer gemäß dem dritten Aspekt der Erfindung sein.

Jede der Steuereinheiten kann nach Bedarf auf beliebige Art und Weise ausgebildet sein, beispielsweise derart, dass sie die jeweilige Empfangsqualität zumindest in Abhängigkeit von einer Signalstärke des jeweiligen empfangenen Funksignals ermittelt. Alternativ oder zusätzlich können aber auch andere Kriterien, beispielsweise die für die Dienstgüte (QoS, kurz für "Quality of Service") verwendet werden.

Vorzugsweise wird das Multi-Hopping-Konzept verwendet, sodass der zweite Teilnehmer die Anforderungsnachricht mithilfe seiner Kommunikationseinheit an weitere, dritte Teilnehmer des Kommunikationssystems, die außerhalb der Reichweite des ersten Teilnehmers liegen, sendet, Angebotsnachrichten von derartigen dritten Teilnehmern mithilfe seiner Kommunikationseinheit empfängt und an den ersten Teilnehmer sendet, Antwortnachrichten mithilfe seiner Kommunikationseinheit an derartige dritte Teilnehmer sendet und dritte Funksignale, die von derartigen dritten Teilnehmern empfangen werden, mithilfe seiner Kommunikationseinheit von derartigen dritten Teilnehmern empfängt und an den ersten Teilnehmer sendet.

Es kann vorgesehen sein, dass die erste Steuereinheit derart ausgebildet ist, dass sie, falls die erste Empfangsqualität größer gleich dem Schwellenwert ist, mit Hilfe der ersten Kommunikationseinheit die Verbindung mit dem Partner abbaut.

Dadurch wird das Kommunikationssystem entlastet, sobald die Übertragung nicht mehr erforderlich oder sinnvoll ist.

Die erste Steuereinheit kann nach Bedarf auf beliebige Art und Weise ausgebildet sein, beispielsweise derart, dass sie den ersten Schwellenwert gleich der zweiten Empfangsqualität setzt.

Somit kann die erste Steuereinheit durch den Vergleich der ersten Empfangsqualität mit dem erstem Schwellenwert gleichzeitig die erste mit der zweiten Empfangsqualität vergleichen.

Alternativ oder zusätzlich kann die Anforderungsnachricht die erste Empfangsqualität enthalten.

Somit kann der zweite Teilnehmer die erste mit der zweiten Empfangsqualität vergleichen und dann abhängig von dem Vergleichsergebnis die Angebotsnachricht erzeugen oder nicht.

Die zweite Steuereinheit kann nach Bedarf auf beliebige Art und Weise ausgebildet sein, beispielsweise derart, dass sie, falls die Anforderungsnachricht die erste Empfangsqualität enthält, den zweiten Schwellenwert gleich der ersten Empfangsqualität setzt.

Somit kann die zweite Steuereinheit durch den Vergleich der zweiten Empfangsqualität mit dem zweiten Schwellenwert gleichzeitig die erste mit der zweiten Empfangsqualität vergleichen und dann, abhängig von dem Vergleichsergebnis, geeignet reagieren, beispielsweise indem sie die Angebotsnachricht erzeugt oder nicht.

Jeder Funkempfänger kann nach Bedarf auf beliebige Art und Weise ausgebildet sein und beispielsweise ein Radio und/oder einen Fernseher und/oder ein Mobiltelefon und/oder ein Navigationsgerät umfassen.

Jede Steuereinheit kann nach Bedarf auf beliebige Art und Weise ausgebildet sein. So kann sie beispielsweise separat von der jeweiligen Kommunikationseinheit und/oder dem jeweiligen Funkempfänger ausgebildet oder in die jeweilige Kommunikationseinheit und/oder den jeweiligen Funkempfänger integriert sein.

Die Funksignale sind Rundfunksignale, wie etwa analoge Radiosignale (UKW, MW, LW) oder digitale Radiosignale (DAB, IBOC, SDARS) oder analoge oder digitale Fernsehsignale oder Verkehrsfunksignale (TMC), oder Mobilfunksignale (Telefonie, SMS, Internet) oder Satellitennavigationssignale (GPS).

Bevorzugt ist die erste Steuereinheit derart ausgebildet, dass sie der Anforderungsnachricht Informationen über den aktuell im ersten Funkempfänger eingestellten Sender bzw. Kanal hinzufügt.

Somit kann der zweite Teilnehmer in seinem zweiten Funkempfänger diesen Sender bzw. Kanal oder einen diesem Sender bzw. Kanal zugeordneten Alternativsender bzw. Alternativkanal einstellen, vorzugsweise mithilfe von Informationen über Rundfunkprogramme, die per RDS bereitgestellt werden.

Es kann vorgesehen sein, dass der zweite Teilnehmer weiter umfasst einen weiteren Funkempfänger zum Empfangen von Funksignalen, der an die zweite Steuereinheit gekoppelt ist, wobei
- die Anforderungsnachricht Informationen über einen von dem ersten Teilnehmer gewünschten Kanal enthält;
- die zweite Steuereinheit derart ausgebildet ist, dass sie
   - den weiteren Funkempfänger auf diesen Kanal oder einen diesem Kanal zugeordneten Alternativkanal einstellt.

Somit kann der zweite Funkempfänger unverändert weiterarbeiten und beispielsweise den vom Fahrer eingestellten Radiosender wiedergeben, und den weiteren Funkempfänger für die angeforderte Unterstützung des ersten Teilnehmers einsetzen.

Es kann vorgesehen sein, dass der zweite Teilnehmer weiter umfasst ein Navigationsgerät, das an die zweite Steuereinheit gekoppelt ist, wobei
- die zweite Steuereinheit derart ausgebildet ist, dass sie
   - mit Hilfe des Navigationsgeräts den aktuellen Standort des zweiten Teilnehmers ermittelt;
   - den aktuellen Standort der Angebotsnachricht hinzufügt.

Somit kann der erste Teilnehmer seinen eigenen aktuellen Standort mit dem des zweiten Teilnehmers vergleichen und dann, abhängig von dem Vergleichsergebnis, geeignet reagieren, beispielsweise indem er die Antwortnachricht erzeugt oder nicht.

Es kann vorgesehen sein, dass der erste Teilnehmer weiter umfasst ein Navigationsgerät, das an die erste Steuereinheit gekoppelt ist, wobei
- die erste Steuereinheit derart ausgebildet ist, dass sie
   - mit Hilfe des Navigationsgeräts den aktuellen Standort des ersten Teilnehmers ermittelt;
   - den aktuellen Standort der Anforderungsnachricht hinzufügt.

Somit kann der zweite Teilnehmer seinen eigenen aktuellen Standort mit dem des ersten Teilnehmers vergleichen und dann, abhängig von dem Vergleichsergebnis, geeignet reagieren, beispielsweise indem er die Anforderungsnachricht erzeugt oder nicht.

Die Erfindung schlägt gemäß einem zweiten Aspekt einen Teilnehmer in einem Car-2-X-Kommunikationssystem, insbesondere in einem der vorgeschlagenen Car-2-X-Kommunikationssysteme, vor, umfassend
- eine Kommunikationseinheit zum Empfangen von Nachrichten aus dem Kommunikationssystem und zum Senden von Nachrichten in das Kommunikationssystem;
- einen Funkempfänger zum Empfangen von Funksignalen;
- eine Steuereinheit, die an die Kommunikationseinheit und den Funkempfänger gekoppelt ist;
   wobei
- die Steuereinheit derart ausgebildet ist, dass sie
   - eine erste Empfangsqualität eines vom Funkempfänger empfangenen Funksignals überwacht;
   - falls die erste Empfangsqualität kleiner als ein vorbestimmter Schwellenwert ist, eine Anforderungsnachricht, die eine Übertragung von Funksignalen über das Kommunikationssystem anfordert, erzeugt und mit Hilfe der Kommunikationseinheit in das Kommunikationssystem sendet;
   - falls die Kommunikationseinheit von einem anderen Teilnehmer des Kommunikationssystems eine Angebotsnachricht, die eine zweite Empfangsqualität eines vom anderen Teilnehmer empfangenen Funksignals enthält, empfängt, auf Grundlage dieser Angebotsnachricht den anderen Teilnehmer als Partner auswählt oder nicht;
   - falls ein Partner ausgewählt ist, eine Antwortnachricht, die eine Verbindung mit dem Partner über das Kommunikationssystem zur Übertragung des vom Partner empfangenen Funksignals ankündigt, erzeugt und mit Hilfe der Kommunikationseinheit an den Partner sendet;
   - mit Hilfe der Kommunikationseinheit die Verbindung mit dem Partner aufbaut;
   - das übertragene Funksignal an den Funkempfänger leitet und diesen anweist, das von ihm empfangene Funksignal durch dieses zu ersetzen.

Der Teilnehmer kann beispielsweise der erste Teilnehmer in einem der vorgeschlagenen Car-2-X-Kommunikationssysteme gemäß dem ersten Aspekt der Erfindung sein.

Das Car-2-X-Kommunikationssystem kann beispielsweise eines der vorgeschlagenen Car-2-X-Kommunikationssysteme gemäß dem ersten Aspekt der Erfindung sein, und der andere Teilnehmer kann beispielsweise einer der vorgeschlagenen Teilnehmer gemäß dem dritten Aspekt der Erfindung sein.

Die Erfindung schlägt gemäß einem dritten Aspekt einen Teilnehmer in einem Car-2-X-Kommunikationssystem, insbesondere in einem der vorgeschlagenen Car-2-X-Kommunikationssysteme, vor, umfassend
- eine Kommunikationseinheit zum Empfangen von Nachrichten aus dem Kommunikationssystem und zum Senden von Nachrichten in das Kommunikationssystem;
- einen Funkempfänger zum Empfangen von Funksignalen; gekennzeichnet durch
- eine Steuereinheit, die an die Kommunikationseinheit und den Funkempfänger gekoppelt ist;
   wobei
- die Steuereinheit derart ausgebildet ist, dass sie
   - eine Empfangsqualität eines vom Funkempfänger empfangenen Funksignals überwacht;
   - falls die Kommunikationseinheit von einem anderen Teilnehmer des Kommunikationssystems eine Anforderungsnachricht, die eine Übertragung von Funksignalen über das Kommunikationssystem anfordert, empfängt und falls die Empfangsqualität größer gleich einem vorbestimmten Schwellenwert ist, eine Angebotsnachricht, die die Empfangsqualität enthält, mit Hilfe der Kommunikationseinheit an den anderen Teilnehmer sendet;
   - falls die Kommunikationseinheit von dem anderen Teilnehmer eine Antwortnachricht, die eine Verbindung mit dem anderen Teilnehmer über das Kommunikationssystem zur Übertragung des Funksignals ankündigt, empfängt, mit Hilfe der Kommunikationseinheit die Verbindung mit dem anderen Teilnehmer aufbaut und das Funksignal an den anderen Teilnehmer überträgt.

Der Teilnehmer kann beispielsweise der zweite Teilnehmer in einem der vorgeschlagenen Car-2-X-Kommunikationssysteme gemäß dem ersten Aspekt der Erfindung sein.

Das Car-2-X-Kommunikationssystem kann beispielsweise eines der vorgeschlagenen Car-2-X-Kommunikationssysteme gemäß dem ersten Aspekt der Erfindung sein, und der andere Teilnehmer kann beispielsweise einer der vorgeschlagenen Teilnehmer gemäß dem zweiten Aspekt der Erfindung sein.

Die vorgeschlagenen Teilnehmer gemäß dem zweiten Aspekt der Erfindung und die vorgeschlagenen Teilnehmer gemäß dem dritten Aspekt der Erfindung können nach Bedarf auf beliebige Art und Weise, insbesondere ganz oder teilweise, kombiniert werden.

Die Erfindung schlägt gemäß einem vierten Aspekt ein Verfahren zum Empfangen oder Verarbeiten von Funksignalen in einem Car-2-X-Kommunikationssystem, insbesondere in einem der vorgeschlagenen Car-2-X-Kommunikationssysteme, vor, wobei
- das Kommunikationssystem wenigstens zwei Teilnehmer umfasst;
- eine erste Empfangsqualität eines ersten Funksignals, das von einem ersten Teilnehmer empfangen wird, überwacht wird;
- eine zweite Empfangsqualität eines zweiten Funksignals, das von einem zweiten Teilnehmer empfangen wird, überwacht wird; wobei
- das erste und das zweite Funksignal Rundfunksignale oder Mobilfunksignale oder Satellitennavigationssignale sind;
- falls die erste Empfangsqualität kleiner als ein vorbestimmter erster Schwellenwert ist, eine Anforderungsnachricht, die eine Übertragung von Funksignalen über das Kommunikationssystem anfordert, erzeugt und in das Kommunikationssystem gesendet wird;
- falls die Anforderungsnachricht empfangen wird und falls die zweite Empfangsqualität größer gleich einem vorbestimmten zweiten Schwellenwert ist, eine Angebotsnachricht, die die zweite Empfangsqualität enthält, an den ersten Teilnehmer gesendet wird;
- falls die Angebotsnachricht empfangen wird, auf Grundlage dieser Angebotsnachricht der zweite Teilnehmer als Partner ausgewählt wird oder nicht;
- falls der zweite Teilnehmer als Partner ausgewählt ist, eine Antwortnachricht, die eine Verbindung mit dem Partner über das Kommunikationssystem zur Übertragung des zweiten Funksignals ankündigt, erzeugt und an den Partner gesendet wird;
- die Verbindung zwischen dem ersten Teilnehmer und dem Partner aufgebaut wird und das zweite Funksignal an den ersten Teilnehmer übertragen wird;
- bei dem ersten Teilnehmer das erste Funksignal durch das übertragene zweite Funksignal ersetzt wird.

Die Erfindung schlägt gemäß einem fünften Aspekt ein Verfahren zum Empfangen oder Verarbeiten von Funksignalen in einem Car-2-X-Kommunikationssystem, insbesondere in einem der vorgeschlagenen Car-2-X-Kommunikationssysteme, vor, wobei
- das Kommunikationssystem wenigstens zwei Teilnehmer umfasst;
- eine erste Empfangsqualität eines ersten Funksignals, das von einem ersten Teilnehmer empfangen wird, überwacht wird;
- falls die erste Empfangsqualität kleiner als ein vorbestimmter Schwellenwert ist, eine Anforderungsnachricht, die eine Übertragung von Funksignalen über das Kommunikationssystem anfordert, erzeugt und in das Kommunikationssystem gesendet wird;
- falls eine Angebotsnachricht, die eine zweite Empfangsqualität eines zweiten Funksignals, das von einem zweiten Teilnehmer empfangen wird, enthält, empfangen wird, auf Grundlage dieser Angebotsnachricht der zweite Teilnehmer als Partner ausgewählt wird oder nicht;
- falls der zweite Teilnehmer als Partner ausgewählt ist, eine Antwortnachricht, die eine Verbindung mit dem Partner über das Kommunikationssystem zur Übertragung des zweiten Funksignals ankündigt, erzeugt und an den Partner gesendet wird;
- die Verbindung mit dem Partner aufgebaut wird;
- bei dem ersten Teilnehmer das erste Funksignal durch das übertragene zweite Funksignal ersetzt wird.

Die Erfindung schlägt gemäß einem sechsten Aspekt ein Verfahren zum Empfangen oder Verarbeiten von Funksignalen in einem Car-2-X-Kommunikationssystem, insbesondere in einem der vorgeschlagenen Car-2-X-Kommunikationssysteme, vor, wobei
- das Kommunikationssystem wenigstens zwei Teilnehmer umfasst;
- eine Empfangsqualität eines Funksignals, das von einem zweiten Teilnehmer empfangen wird, überwacht wird;
- falls von einem ersten Teilnehmer eine Anforderungsnachricht, die eine Übertragung von Funksignalen über das Kommunikationssystem anfordert, empfangen wird und falls die Empfangsqualität größer gleich einem vorbestimmten Schwellenwert ist, eine Angebotsnachricht, die die Empfangsqualität enthält, an den ersten Teilnehmer gesendet wird;
- falls von dem ersten Teilnehmer eine Antwortnachricht, die eine Verbindung mit dem ersten Teilnehmer über das Kommunikationssystem zur Übertragung des Funksignals ankündigt, empfangen wird, die Verbindung mit dem ersten Teilnehmer aufgebaut wird und das Funksignal an den ersten Teilnehmer übertragen wird.

Die vorgeschlagenen Verfahren gemäß dem fünften und sechsten Aspekt der Erfindung können nach Bedarf auf beliebige Art und Weise, insbesondere ganz oder teilweise, kombiniert werden.

Bei jedem der vorgeschlagenen Verfahren gemäß dem vierten, fünften und sechsten Aspekt der Erfindung kann das Car-2-X-Kommunikationssystem beispielsweise eines der vorgeschlagenen Car-2-X-Kommunikationssysteme gemäß dem ersten Aspekt der Erfindung sein, kann der erste Teilnehmer beispielsweise einer der vorgeschlagenen Teilnehmer gemäß dem zweiten Aspekt der Erfindung sein, und kann der zweite Teilnehmer beispielsweise einer der vorgeschlagenen Teilnehmer gemäß dem dritten Aspekt der Erfindung sein.

Jeder der Teilnehmer in einem der vorgeschlagenen Car-2-X-Kommunikationssysteme gemäß dem ersten Aspekt der Erfindung und in einem der vorgeschlagenen Verfahren gemäß dem vierten, fünften und sechsten Aspekt der Erfindung sowie jeder der vorgeschlagenen Teilnehmer gemäß dem zweiten und dritten Aspekt der Erfindung kann nach Bedarf auf beliebige Art und Weise ausgebildet sein, beispielsweise als Fahrzeug oder Infrastrukturstation.

Die Ausführungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert werden. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in:
- Fig. 1: ein Fahrzeug in einer ersten Ausführungsform als Teilnehmer in einem Car-2-X-Kommunikationssystem;
- Fig. 2: ein Fahrzeug in einer zweiten Ausführungsform als Teilnehmer in einem Car-2-X-Kommunikationssystem; und
- Fig. 3: ein Car-2-X-Kommunikationssystem in einer bevorzugten Ausführungsform mit den Fahrzeugen der Fig. 1 und 2.

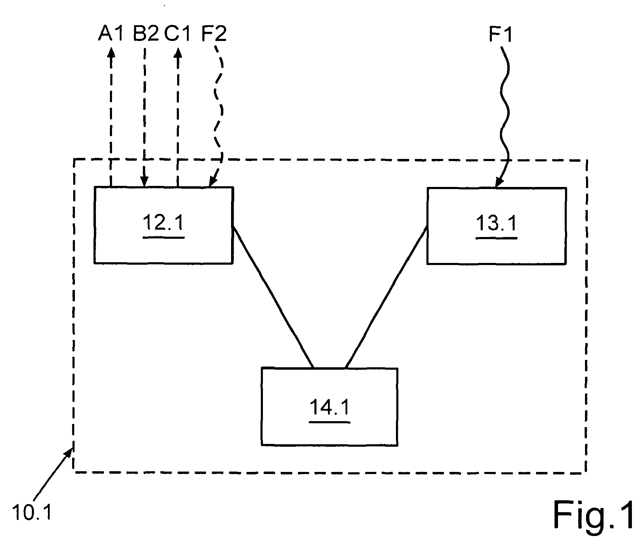

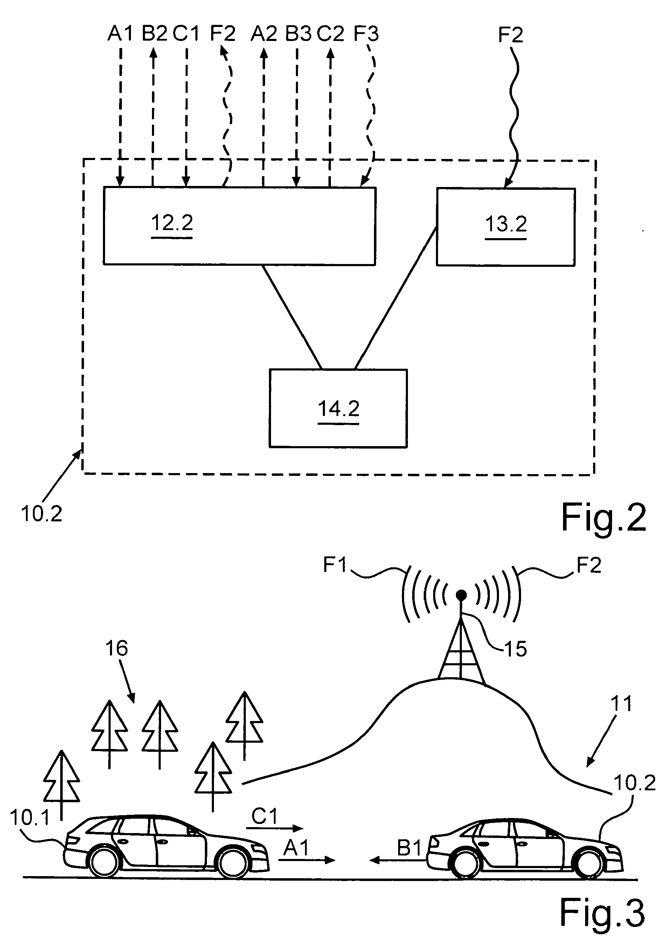

In der Fig. 1 ist ein Fahrzeug 10.1 als eine erste Ausführungsform eines Teilnehmers 10.1 in einem Car-2-X-Kommunikationssystem 11 (Fig. 3) schematisch dargestellt. Dieses Fahrzeug 10.1 ist hier als PKW ausgebildet und umfasst eine erste Kommunikationseinheit 12.1 zum Empfangen von Nachrichten aus dem Kommunikationssystem 11 und zum Senden von Nachrichten in das Kommunikationssystem 11, einen ersten Funkempfänger 13.1 zum Empfangen von ersten Funksignalen F1 und eine erste Steuereinheit 14.1, die an die erste Kommunikationseinheit 12.1 und den ersten Funkempfänger 13.1 gekoppelt ist.

Bei dieser ersten Ausführungsform ist der erste Funkempfänger 13.1 ein Autoradio und sind somit die ersten Funksignale F1 Radiosignale von Radiosendern.

Die erste Steuereinheit 14.1 ist derart ausgebildet, dass sie eine erste Empfangsqualität eines vom ersten Funkempfänger 13.1 empfangenen ersten Funksignals F1 überwacht, dass sie, falls die erste Empfangsqualität kleiner als ein vorbestimmter erster Schwellenwert ist, eine Anforderungsnachricht A1, die eine Übertragung von Funksignalen F2 über das Kommunikationssystem 11 anfordert, erzeugt und mit Hilfe der ersten Kommunikationseinheit 12.1 in das Kommunikationssystem 11 sendet, dass sie, falls die Kommunikationseinheit 12.1 von einem anderen Teilnehmer 10.2 (Fig.2 und 3) des Kommunikationssystems 11 eine Angebotsnachricht B2, die eine zweite Empfangsqualität eines vom anderen Teilnehmer 10.2 empfangenen Funksignals F2 enthält, empfängt, auf Grundlage dieser Angebotsnachricht B2 den anderen Teilnehmer 10.2 als Partner auswählt oder nicht, dass sie, falls ein Partner 10.2 ausgewählt ist, eine Antwortnachricht C1, die eine Verbindung mit dem Partner 10.2 über das Kommunikationssystem 11 zur Übertragung des vom Partner 10.2 empfangenen Funksignals F2 ankündigt, erzeugt und mit Hilfe der ersten Kommunikationseinheit 12.1 an den Partner 10.2 sendet, dass sie mit Hilfe der ersten Kommunikationseinheit 12.1 die Verbindung mit dem Partner 10.2 aufbaut, und dass sie das übertragene Funksignal F2 an den ersten Funkempfänger 13.1 leitet und diesen anweist, das von ihm empfangene Funksignal F1 durch dieses übertragene Funksignal F2 zu ersetzen.

Der erste Funkempfänger 13.1 führt dann das übertragene Funksignal F2 an Stelle des von ihm empfangenen Funksignals F1 einem Audioverstärker (nicht dargestellt) zu.

Bei dieser ersten Ausführungsform ist die erste Steuereinheit 14.1 derart ausgebildet, dass sie, falls die erste Empfangsqualität größer gleich dem ersten Schwellenwert ist, mit Hilfe der ersten Kommunikationseinheit 12.1 die Verbindung mit dem Partner 10.2 abbaut.

In der Fig. 2 ist ein Fahrzeug 10.2 als eine zweite Ausführungsform eines zweiten Teilnehmers 10.2 in einem Car-2-X-Kommunikationssystem 11 (Fig. 3) schematisch dargestellt. Diese zweite Ausführungsform ähnelt der ersten Ausführungsform, sodass im Folgenden lediglich die Unterschiede ausführlicher beschrieben werden.

Dieses Fahrzeug 10.2 umfasst eine zweite Kommunikationseinheit 12.2 zum Empfangen von Nachrichten aus dem Kommunikationssystem 11 und zum Senden von Nachrichten in das Kommunikationssystem 11, einen zweiten Funkempfänger 13.2 zum Empfangen von zweiten Funksignalen F2 und eine zweite Steuereinheit 14.2, die an die zweite Kommunikationseinheit 12.2 und den zweiten Funkempfänger 13.2 gekoppelt ist.

Bei dieser zweiten Ausführungsform ist der zweite Funkempfänger 13.2 ein Autoradio und sind somit die zweiten Funksignale F2 Radiosignale von Radiosendern.

Bei dieser zweiten Ausführungsform ist die zweite Steuereinheit 14.2 derart ausgebildet, dass sie eine zweite Empfangsqualität eines vom zweiten Funkempfänger 13.2 empfangenen zweiten Funksignals F2 überwacht, dass sie, falls die zweite Kommunikationseinheit 12.2 vom ersten Fahrzeug 10.1 die Anforderungsnachricht A1 empfängt und falls die zweite Empfangsqualität größer gleich einem vorbestimmten zweiten Schwellenwert ist, die Angebotsnachricht B2 mit Hilfe der zweiten Kommunikationseinheit 12.2 an das erste Fahrzeug 10.1 sendet, dass sie, falls die zweite Kommunikationseinheit 12.2 von dem ersten Fahrzeug 10.1 die Antwortnachricht C1 empfängt, mit Hilfe der zweiten Kommunikationseinheit 12.2 die Verbindung mit dem ersten Fahrzeug 10.1 aufbaut und das zweite Funksignal F2 an das erste Fahrzeug 10.1 überträgt.

Diese zweite Ausführungsform ähnelt deshalb der ersten Ausführungsform, weil die zweite Kommunikationseinheit 12.2, der zweite Funkempfänger 13.2 und die zweite Steuereinheit 14.2 ähnlich wie die erste Kommunikationseinheit 12.1, der erste Funkempfänger 13.1 und die erste Steuereinheit 14.1 ausgebildet sind.

Folglich ist die zweite Steuereinheit 14.2 weiter derart ausgebildet, dass sie, falls die zweite Empfangsqualität kleiner als der zweite Schwellenwert ist, eine Anforderungsnachricht A2, die eine Übertragung von Funksignalen F3 über das Kommunikationssystem 11 anfordert, erzeugt und mit Hilfe der zweiten Kommunikationseinheit 12.2 in das Kommunikationssystem 11 sendet, dass sie, falls die Kommunikationseinheit von einem anderen Teilnehmer des Kommunikationssystems 11 eine Angebotsnachricht B3, die eine dritte Empfangsqualität eines vom anderen Teilnehmer empfangenen Funksignals F3 enthält, empfängt, auf Grundlage dieser Angebotsnachricht B3 den anderen Teilnehmer als Partner auswählt oder nicht, dass sie, falls ein Partner ausgewählt ist, eine Antwortnachricht C2, die eine Verbindung mit dem Partner über das Kommunikationssystem 11 zur Übertragung des vom Partner empfangenen Funksignals F3 ankündigt, erzeugt und mit Hilfe der zweiten Kommunikationseinheit 12.2 an den Partner sendet, dass sie mit Hilfe der zweiten Kommunikationseinheit 12.2 die Verbindung mit dem Partner aufbaut, und dass sie das übertragene Funksignal F3 an den zweiten Funkempfänger 13.2 leitet und diesen anweist, das von ihm empfangene Funksignal F2 durch dieses übertragene Funksignal F3 zu ersetzen.

Das zweite Fahrzeug 10.2 kann also nicht nur als Quelle für ein, beispielsweise von dem ersten Fahrzeug 10.1, angefordertes besseres Funksignal F2 dienen, sondern auch selbst wie das erste Fahrzeug 10.1 bei Bedarf ein besseres Funksignal F3 anfordern.

In der Fig. 3 ist ein Car-2-X-Kommunikationssystem 11 in einer bevorzugten Ausführungsform schematisch dargestellt. Dieses Kommunikationssystem 11 umfasst wenigstens zwei Teilnehmer 10, die hier durch die Teilnehmer beziehungsweise Fahrzeuge 10.1 und 10.2 der Fig. 1 und 2 gebildet sind.

Im folgenden wird anhand dieses Kommunikationssystems 11 ein erfindungsgemäßes Verfahren zum Empfangen von Funksignalen F in einem Car-2-X-Kommunikationssystem 11 beschrieben.

Der erste Teilnehmer beziehungsweise das erste Fahrzeug 10.1 empfängt das erste Funksignal F1 und überwacht die erste Empfangsqualität des ersten Funksignals F1. Der zweite Teilnehmer beziehungsweise das zweite Fahrzeug 10.2 empfängt das zweite Funksignal F2 und überwacht die zweite Empfangsqualität des zweiten Funksignals F2. Beide Funksignale F1, F2 werden von demselben Sendemast 15 auf demselben Kanal gesendet. Das erste Fahrzeug 10.1 fährt zur Zeit durch einen Wald 16, der zwischen dem ersten Fahrzeug 10.1 und dem Sendemast 15 liegt und den direkten Antennenempfang des ersten Funksignals F1 beeinträchtigt. Das zweite Fahrzeug 10.2 hat den Wald 16 bereits durchquert und fährt zur Zeit auf derselben Straße vor dem ersten Fahrzeug 10.1 durch offene Landschaft, sodass kein Hindernis zwischen dem zweiten Fahrzeug 10.2 und dem Sendemast 15 liegt und der direkte Antennenempfang des zweiten Funksignals F2 nicht beeinträchtigt ist.

Falls die erste Empfangsqualität kleiner als der erste Schwellenwert ist, erzeugt das erste Fahrzeug 10.1 die Anforderungsnachricht A1 und sendet sie in das Kommunikationssystem 11. Falls das zweite Fahrzeug 10.2 die Anforderungsnachricht A1 empfängt und falls die zweite Empfangsqualität größer gleich dem zweiten Schwellenwert ist, sendet es die Angebotsnachricht B2 an das erste Fahrzeug 10.1. Falls das erste Fahrzeug 10.1 die Angebotsnachricht B2 empfängt, wählt es auf Grundlage dieser Angebotsnachricht B2 das zweite Fahrzeug 10.2 als Partner wird oder nicht. Hierzu vergleicht es die erste mit der zweiten Empfangsqualität und wählt das zweite Fahrzeug 10.2 als Partner, falls die zweite größer als die erste Empfangsqualität ist. Falls das zweite Fahrzeug 10.2 als Partner ausgewählt ist, erzeugt das erste Fahrzeug 10.1 die Antwortnachricht C1 und sendet es an das zweite Fahrzeug 10.2. Daraufhin bauen die beiden Fahrzeuge 10.1, 10.2 die Verbindung zwischen sich auf, und das zweite Fahrzeug 10.2 überträgt über diese Verbindung das zweite Funksignal F2 an das erste Fahrzeug 10.1. Dann ersetzt das erste Fahrzeug 10.1 1 das erste Funksignal F1 durch das derart übertragene zweite Funksignal F2.

## Patentansprüche

1. Car-2-X-Kommunikationssystem (11), umfassend
- wenigstens zwei Teilnehmer (10.1, 10.2); wobei
- ein erster Teilnehmer (10.1) umfasst
• eine erste Kommunikationseinheit (12.1) zum Empfangen von Nachrichten aus dem Kommunikationssystem (11) und zum Senden von Nachrichten in das Kommunikationssystem (11);
• einen ersten Funkempfänger (13.1) zum Empfangen von Funksignalen;
- ein zweiter Teilnehmer (10.2) umfasst
• eine zweite Kommunikationseinheit (12.2) zum Empfangen von Nachrichten aus dem Kommunikationssystem (11) und zum Senden von Nachrichten in das Kommunikationssystem (11);
• einen zweiten Funkempfänger (13.2) zum Empfangen von Funksignalen;
wobei
- die Funksignale Rundfunksignale oder Mobilfunksignale oder Satellitennavigationssignale sind;
**dadurch gekennzeichnet, dass**
- der erste Teilnehmer (10.1) weiter umfasst
• eine erste Steuereinheit (14.1), die an die erste Kommunikationseinheit (12.1) und den ersten Funkempfänger (13.1) gekoppelt ist;
- die erste Steuereinheit (14.1) derart ausgebildet ist, dass sie
• eine erste Empfangsqualität eines vom ersten Funkempfänger (13.1) empfangenen Funksignals (F1) überwacht;
• falls die erste Empfangsqualität kleiner als ein vorbestimmter erster Schwellenwert ist, eine Anforderungsnachricht (A1), die eine Übertragung von Funksignalen über das Kommunikationssystem (11) anfordert, erzeugt und mit Hilfe der ersten Kommunikationseinheit (12.1) in das Kommunikationssystem (11) sendet;
• falls die erste Kommunikationseinheit (12.1) von dem zweiten Teilnehmer (10.2) eine Angebotsnachricht (B2), die eine zweite Empfangsqualität eines vom zweiten Teilnehmer (10.2) empfangenen Funksignals (F2) enthält, empfängt, auf Grundlage dieser Angebotsnachricht (B2) den zweiten Teilnehmer (10.2) als Partner auswählt oder nicht;
• falls der zweite Teilnehmer (10.2) als Partner ausgewählt ist, eine Antwortnachricht (C1), die eine Verbindung mit dem Partner (10.2) über das Kommunikationssystem (11) zur Übertragung des vom Partner (10.2) empfangenen Funksignals (F2) ankündigt, erzeugt und mit Hilfe der ersten Kommunikationseinheit (12.1) an den Partner (10.2) sendet;
• mit Hilfe der ersten Kommunikationseinheit (12.1) die Verbindung mit dem Partner (10.2) aufbaut;
• das übertragene Funksignal (F2) an den ersten Funkempfänger (13.1) leitet und diesen anweist, das von ihm empfangene Funksignal (F1) durch dieses zu ersetzen;
- der zweite Teilnehmer (10.2) weiter umfasst
• eine zweite Steuereinheit (14.2), die an die zweite Kommunikationseinheit (12.2) und den zweiten Funkempfänger (13.2) gekoppelt ist;
- die zweite Steuereinheit (14.2) derart ausgebildet ist, dass sie
• die zweite Empfangsqualität überwacht;
• falls die zweite Kommunikationseinheit (12.2) von dem ersten Teilnehmer (10.1) die Anforderungsnachricht (A1) empfängt und falls die zweite Empfangsqualität größer gleich einem vorbestimmten zweiten Schwellenwert ist, die Angebotsnachricht (B2) mit Hilfe der zweiten Kommunikationseinheit (12.2) an den ersten Teilnehmer (10.1) sendet;
• falls die zweite Kommunikationseinheit (12.2) die Antwortnachricht (C1) empfängt, mit Hilfe der zweiten Kommunikationseinheit (12.2) die Verbindung mit dem ersten Teilnehmer (10.1) aufbaut und das vom zweiten Funkempfänger (13.2) empfangene Funksignal (F2) an den ersten Teilnehmer (10.2) überträgt.

2. Kommunikationssystem (11) nach Anspruch 1, wobei
- die erste Steuereinheit (14.1) derart ausgebildet ist, dass sie
• falls die erste Empfangsqualität größer gleich dem ersten Schwellenwert ist, mit Hilfe der ersten Kommunikationseinheit (12.1) die Verbindung mit dem Partner (10.2) abbaut.

3. Kommunikationssystem (11) nach Anspruch 1 oder 2, wobei
- die erste Steuereinheit (14.1) derart ausgebildet ist, dass sie
• den ersten Schwellenwert gleich der zweiten Empfangsqualität setzt.

4. Kommunikationssystem (11) nach einem der vorherigen Ansprüche, wobei
- die Anforderungsnachricht (A1) die erste Empfangsqualität enthält.

5. Kommunikationssystem (11) nach Anspruch 4, wobei
- die zweite Steuereinheit (14.2) derart ausgebildet ist, dass sie
• den zweiten Schwellenwert gleich der ersten Empfangsqualität setzt.

6. Kommunikationssystem (11) nach einem der vorherigen Ansprüche, wobei
- die erste Steuereinheit (14.1) derart ausgebildet ist, dass sie
• der Anforderungsnachricht (A1) Informationen über den aktuell im ersten Funkempfänger (13.1) eingestellten Sender bzw. Kanal hinzufügt.

7. Kommunikationssystem (11) nach einem der vorherigen Ansprüche, wobei
- der zweite Teilnehmer (10.2) weiter umfasst
• einen weiteren Funkempfänger zum Empfangen von Funksignalen, der an die zweite Steuereinheit (14.2) gekoppelt ist;
wobei
- die Anforderungsnachricht (A1) Informationen über einen von dem ersten Teilnehmer (10.1) gewünschten Kanal enthält;
- die zweite Steuereinheit (14.2) derart ausgebildet ist, dass sie
• den weiteren Funkempfänger auf diesen Kanal oder einen diesem Kanal zugeordneten Alternativkanal einstellt.

8. Kommunikationssystem (11) nach einem der vorherigen Ansprüche, wobei
- der zweite Teilnehmer (10.2) weiter umfasst
• ein Navigationsgerät, das an die zweite Steuereinheit (14.2) gekoppelt ist;
wobei
- die zweite Steuereinheit (14.2) derart ausgebildet ist, dass sie
• mit Hilfe des Navigationsgeräts den aktuellen Standort des zweiten Teilnehmers (10.2) ermittelt;
• den aktuellen Standort der Angebotsnachricht (B2) hinzufügt.

9. Kommunikationssystem (11) nach einem der vorherigen Ansprüche, wobei
- der erste Teilnehmer (10.1) weiter umfasst
• ein Navigationsgerät, das an die erste Steuereinheit (14.1) gekoppelt ist;
wobei
- die erste Steuereinheit (14.1) derart ausgebildet ist, dass sie
• mit Hilfe des Navigationsgeräts den aktuellen Standort des ersten Teilnehmers (10.1) ermittelt;
• den aktuellen Standort der Anforderungsnachricht (A1) hinzufügt.

10. Teilnehmer (10.1) in einem Car-2-X-Kommunikationssystem (11) gemäß einem der Ansprüche 1 bis 9, umfassend
- eine Kommunikationseinheit (12.1) zum Empfangen von Nachrichten aus dem Kommunikationssystem (11) und zum Senden von Nachrichten in das Kommunikationssystem (11);
- einen Funkempfänger (13.1) zum Empfangen von Funksignalen;
- eine Steuereinheit (14.1), die an die Kommunikationseinheit (12.1) und den Funkempfänger (13.1) gekoppelt ist;
wobei
- die Steuereinheit (14.1) derart ausgebildet ist, dass sie
• eine erste Empfangsqualität eines vom Funkempfänger (13.1) empfangenen Funksignals (F1) überwacht;
• falls die erste Empfangsqualität kleiner als ein vorbestimmter Schwellenwert ist, eine Anforderungsnachricht (A1), die eine Übertragung von Funksignalen über das Kommunikationssystem (11) anfordert, erzeugt und mit Hilfe der Kommunikationseinheit (12.1) in das Kommunikationssystem (11) sendet;
• falls die Kommunikationseinheit (12.1) von einem anderen Teilnehmer (10.2) des Kommunikationssystems (11) eine Angebotsnachricht (B2), die eine zweite Empfangsqualität eines vom anderen Teilnehmer (10.2) empfangenen Funksignals (F2) enthält, empfängt, auf Grundlage dieser Angebotsnachricht (B2) den anderen Teilnehmer (10.2) als Partner auswählt oder nicht;
• falls ein Partner (10.2) ausgewählt ist, eine Antwortnachricht (C1), die eine Verbindung mit dem Partner (10.2) über das Kommunikationssystem (11) zur Übertragung des vom Partner (10.2) empfangenen Funksignals (F2) ankündigt, erzeugt und mit Hilfe der Kommunikationseinheit (12.1) an den Partner (10.2) sendet;
• mit Hilfe der Kommunikationseinheit (12.1) die Verbindung mit dem Partner (10.2) aufbaut;
• das übertragene Funksignal (F2) an den Funkempfänger (13.1) leitet und diesen anweist, das von ihm empfangene Funksignal (F1) durch dieses (F2) zu ersetzen.

11. Teilnehmer (10.2) in einem Car-2-X-Kommunikationssystem (11) gemäß einem der Ansprüche 1 bis 9, umfassend
- eine Kommunikationseinheit (12.2) zum Empfangen von Nachrichten aus dem Kommunikationssystem (11) und zum Senden von Nachrichten in das Kommunikationssystem (11);
- einen Funkempfänger (13.2) zum Empfangen von Funksignalen;
- eine Steuereinheit (14.2), die an die Kommunikationseinheit (12.2) und den Funkempfänger (13.2) gekoppelt ist;
wobei
- die Steuereinheit (14) derart ausgebildet ist, dass sie
• eine Empfangsqualität eines vom Funkempfänger (13.2) empfangenen Funksignals (F2) überwacht;
• falls die Kommunikationseinheit (12.2) von einem anderen Teilnehmer (10.1) des Kommunikationssystems (11) eine Anforderungsnachricht (A1), die eine Übertragung von Funksignalen über das Kommunikationssystem (11) anfordert, empfängt und falls die Empfangsqualität größer gleich einem vorbestimmten Schwellenwert ist, eine Angebotsnachricht (B2), die die Empfangsqualität enthält, mit Hilfe der Kommunikationseinheit (12.2) an den anderen Teilnehmer (10.1) sendet;
• falls die Kommunikationseinheit (12.2) von dem anderen Teilnehmer (10.1) eine Antwortnachricht (C1), die eine Verbindung mit dem anderen Teilnehmer (10.1) über das Kommunikationssystem (11) zur Übertragung des Funksignals ankündigt, empfängt, mit Hilfe der Kommunikationseinheit (12.2) die Verbindung mit dem anderen Teilnehmer (10.1) aufbaut und das Funksignal (F2) an den anderen Teilnehmer (10.1) überträgt.

12. Verfahren zum Empfangen von Funksignalen in einem Car-2-X-Kommunikationssystem (11), wobei
- das Kommunikationssystem (11) wenigstens zwei Teilnehmer (10.1, 10.2) umfasst;
**dadurch gekennzeichnet, dass**
- eine erste Empfangsqualität eines ersten Funksignals (F1), das von einem ersten Teilnehmer (10.1) empfangen wird, überwacht wird;
- eine zweite Empfangsqualität eines zweiten Funksignals (F2), das von einem zweiten Teilnehmer (10.2) empfangen wird, überwacht wird; wobei
- das erste und das zweite Funksignal (F1, F2) Rundfunksignale oder Mobilfunksignale oder Satellitennavigationssignale sind;
- falls die erste Empfangsqualität kleiner als ein vorbestimmter erster Schwellenwert ist, eine Anforderungsnachricht (A1), die eine Übertragung von Funksignalen über das Kommunikationssystem (11) anfordert, erzeugt und in das Kommunikationssystem (11) gesendet wird;
- falls die Anforderungsnachricht (A1) empfangen wird und falls die zweite Empfangsqualität größer gleich einem vorbestimmten zweiten Schwellenwert ist, eine Angebotsnachricht (B2), die die zweite Empfangsqualität enthält, an den ersten Teilnehmer (10.1) gesendet wird;
- falls die Angebotsnachricht (B2) empfangen wird, auf Grundlage dieser Angebotsnachricht (B2) der zweite Teilnehmer (10.2) als Partner ausgewählt wird oder nicht;
- falls der zweite Teilnehmer (10.2) als Partner ausgewählt ist, eine Antwortnachricht (C1), die eine Verbindung mit dem Partner (10.2) über das Kommunikationssystem (11) zur Übertragung des zweiten Funksignals (F2) ankündigt, erzeugt und an den Partner (10.2) gesendet wird;
- die Verbindung zwischen dem ersten Teilnehmer (10.1) und dem Partner (10.2) aufgebaut wird und das zweite Funksignal (F2) an den ersten Teilnehmer (10.1) übertragen wird;
- bei dem ersten Teilnehmer (10.2) das erste Funksignal (F1) durch das übertragene zweite Funksignal (F2) ersetzt wird.

## Claims

1. Car-2-X communication system (11), comprising
- at least two subscribers (10.1,10.2),
wherein
- a first subscriber (10.1) comprises
-- a first communication unit (12.1) for receiving messages from the communication system (11) and for transmitting messages within the communication system (11),
-- a first radio receiver (13.1) for receiving radio signals,
- a second subscriber (10.2) comprises
-- a second communication unit (12.2) for receiving messages from the communication system (11) and for transmitting messages within the communication system (11),
-- a second radio receiver (13.2) for receiving radio signals, wherein
- the radio signals are wireless signals or mobile signals or satellite navigation signals,
**characterised in that**
- the first subscriber (10.1) also comprises
-- a first control unit (14.1), which is connected to the first communication unit (12.1) and the first radio receiver (13.1),
- the first control unit (14.1) is designed such that
-- it monitors the first reception quality of a radio signal (F1) received by the first radio receiver (13.1),
-- should the first reception quality be below a predetermined initial threshold value, it generates a request message (A1), which requests a transmission of radio signals via the communication system (11) and transmits it within the communication system (11) by means of the communication unit (12.1),
-- should the first communication unit (12.1) receive an offer message (B2) from the second subscriber (10.2), which comprises the second reception quality for a radio signal (F2) received by the second subscriber (10.2), it selects the second subscriber (10.2) as a partner or not on the basis of this offer message (B2),
-- should the second subscriber (10.2) be selected as a partner, it generates a response message (C1), which announces a connection with the partner (10.2) via the communication system (11) for transmission of the radio signal (F2) received by the partner (10.2), and transmits it to the partner (10.2) by means of the first communication unit (12.1),
-- it establishes the connection with the partner (10.2) by means of the first communication unit (12.1),
-- it forwards the radio signal transmitted (F2) to the first radio receiver (13.1) and instructs the latter to replace the radio signal (F1) received from it with this signal,
- the second subscriber (10.2) also comprises
-- a second control unit (14.2), which is connected to the second communication unit (12.2) and the second radio receiver (13.2),
- the second control unit (14.2) is designed such that
-- it monitors the second reception quality,
-- should the second communication unit (12.2) receive the request message (A1) from the first subscriber (10.1) and should the second reception quality be equal to or above a predetermined second threshold value, it transmits the offer message (B2) to the first subscriber (10.1) by means of the second communication unit (12.2),
-- should the second communication unit (12.2) receive the response message (C1), by means of the second communication unit (12.2) it establishes the connection with the first subscriber (10.1) and transmits the radio signal (F2) received by the second radio receiver (13.2) to the first subscriber (10.2).

2. Communication system (11) according to claim 1, wherein
- the first control unit (14.1) is designed such that
-- should the first reception quality be equal to or above the first threshold value, it establishes the connection with the partner (10.2) by means of the first communication unit (12.1).

3. Communication system (11) according to claim 1 or 2, wherein
- the first control unit (14.1) is designed such that
-- it sets the first threshold value as equal to the second reception quality

4. Communication system (11) according to one of the previous claims, wherein
- the request message (A1) comprises the first reception quality.

5. Communication system (11) according to claim 4, wherein
- the second control unit (14.2) is designed such that
-- it sets the second threshold value as equal to the first reception quality.

6. Communication system (11) according to one of the previous claims, wherein
- the first control unit (14.1) is designed such that
-- it adds information on the transmitter and/or channel set within the first radio receiver (13.1) to the request message (Al).

7. Communication system (11) according to one of the previous claims, wherein
- the second subscriber (10.2) also comprises
-- an additional radio receiver for receiving radio signals, which is connected to the second control unit (14.2),
wherein
- the request message (A1) contains information on the channel required by the first subscriber (10.1),
- the second control unit (14.2) is designed such that
-- it sets the additional radio receiver to this channel or to an alternative channel assigned to this channel.

8. Communication system (11) according to one of the previous claims, wherein
- the second subscriber (10.2) also comprises
-- a navigation device, which is connected to the second control unit (14.2),
wherein
the second control unit (14.2) is designed such that
-- it determines the current location of the second subscriber (10.2) by means of the navigation device,
-- it adds the current location of the offer message (B2).

9. Communication system (11) according to one of the previous claims, wherein
- the first subscriber (10.1) also comprises
-- a navigation device, which is connected to the first control unit (14.1),
wherein
- the first control unit (14.1) is designed such that
-- it determines the current location of the first subscriber (10.1) with the aid of the navigation device,
-- it adds the current location of the request message (A1).

10. Subscriber (10.1) to a Car-2-X communication system (11) according to one of the claims 1 to 9, comprising
- a communication unit (12.1) for receiving messages from the communication system (11) and for transmitting messages within the communication system (11),
- a radio receiver (13.1) for receiving radio signals,
- a control unit (14.1), which is connected to the communication unit (12.1) and the radio receiver (13.1),
wherein
- the control unit (14.1) is designed such that
-- it monitors the first reception quality of a radio signal (F1) received by a radio receiver (13.1),
-- should the first reception quality be below a predetermined threshold value, it generates a request message (A1), which requests the transmission of radio signals via the communication system (11), and transmits it within the communication system (11) by means of the communication unit (12.1),
-- should the communication unit (12.1) receive an offer message (B2) from another subscriber (10.2) within the communication system (11), which comprises the second reception quality for a radio signal (F2) received by the other subscriber (10.2), it selects the other subscriber (10.2) as a partner or not on the basis of this offer message (B2),
-- should a partner (10.2) be selected, it generates a response message (C1), which announces a connection with the partner (10.2) via the communication system (11) for transmission of the radio signal (F2) received by the partner (10.2), and transmits it to the partner (10.2) by means of the communication unit (12.1),
-- it establishes the connection with the partner (10.2) by means of the communication unit (12.1),
-- it forwards the radio signal transmitted (F2) to the radio receiver (13.1) and instructs the latter to replace the radio signal (F1) received from it with this signal (F2).

11. Subscriber (10.2) to a Car-2-X communication system (11) according to one of the claims 1 to 9, comprising
- a communication unit (12.2) for receiving messages from the communication system (11) and for transmitting messages within the communication system (11),
- a radio receiver (13.2) for receiving radio signals,
- a control unit (14.2), which is connected to the communication unit (12.2) and the radio receiver (13.2),
wherein
- the control unit (14) is designed such that
-- it monitors the reception quality of a radio signal (F2) received by a radio receiver (13.2),
-- should the communication unit (12.2) receive a request message (A1) from another subscriber (10.1) to the communication system (11), requesting a transmission of radio signals via the communication system (11) and should the reception quality be equal to or above a predetermined threshold value, it transmits an offer message (B2), which comprises the reception quality, to the other subscriber (10.1) by means of the communication unit (12.2),
-- should the communication unit (12.2) receive a response message (C1) from the other subscriber (10.1), which announces a connection with the other subscriber (10.1) via the communication system (11) for transmission of the radio signal by means of the communication unit (12.2), it establishes the connection with the other subscriber (10.1) and transmits the radio signal (F2) to the other subscriber (10.1).

12. Method for receiving radio signals within a Car-2-X communication system (11), wherein
- the communication system (11) comprises at least two subscribers (10.1, 10.2),
**characterised in that**
- a first reception quality of a first radio signal (F1), which is received by a first subscriber (10.1), is monitored,
- a second reception quality of a second radio signal (F2), which is received by a second subscriber (10.2), is monitored, wherein
- the first and the second radio signals (F1, F2) are wireless signals or mobile radio signals or satellite navigation signals,
- should the first reception quality be below a predetermined first threshold value, a request message (A1), which requests a transmission of radio signals via the communication system (11), is generated and transmitted within the communication system (11),
- should the request message (A1) be received and should the second reception quality be equal to or above a predetermined second threshold value, an offer message (B2), which comprises the second reception quality, is transmitted to the first subscriber (10.1),
- should the offer message (B2) be received, the second subscriber (10.2) is selected as a partner or not on the basis of this offer message (B2),
- should the second subscriber (10.2) be selected as a partner, a response message (C1), which announces a connection with the partner (10.2) via the communication system (11) for transmission of the second radio signal (F2), is generated and transmitted to the partner (10.2),
- the connection between the first subscriber (10.1) and the partner (10.2) is established and the second radio signal (F2) is transmitted to the first subscriber (10.1),
- the first radio signal (F1) is replaced by the second radio signal (F2) transmitted, by the first subscriber (10.2).

## Revendications

1. Système de communication de type Car-2-X (11), comprenant
- au moins deux abonnés (10.1, 10.2),
- un premier abonné (10.1) comprenant
- - une première unité de communication (12.1) servant à recevoir des messages provenant du système de communication (11) et servant à envoyer des messages dans le système de communication (11),
- - un premier récepteur radio (13.1) servant à recevoir des signaux radio
- un deuxième abonné (10.2) comprenant
- une deuxième unité de communication (12.2) servant à recevoir des messages provenant du système de communication (11) et servant à envoyer des messages dans le système de communication (11),
- - un deuxième récepteur radio (13.2) servant à recevoir des signaux radio
- les signaux radio étant des signaux de radiodiffusion ou des signaux de téléphonie mobile ou des signaux de navigation par satellite,
**caractérisé en ce**
- **que** le premier abonné (10.1) comprend en outre
- une première unité de commande (14.1), qui est couplée à la première unité de communication (12.1) et au premier récepteur radio (13.1),
- en ce que la première unité de commande (14.1) est réalisée de telle manière
- - qu'elle surveille une première qualité de réception d'un signal radio (F1) reçu par le premier récepteur radio (13.1),
- - que, si la première qualité de réception est inférieure à une première valeur de seuil prédéterminée, elle génère un message de demande (A1), qui demande une transmission de signaux radio par l'intermédiaire du système de communication (11) et l'envoie, à l'aide de la première unité de communication (12.1), dans le système de communication (11),
- - que, si la première unité de communication (12.1) reçoit du deuxième abonné (10.2) un message d'offre (B2), qui contient une deuxième qualité de réception d'un signal radio (F2) reçu par le deuxième abonné (10.2), elle sélectionne ou non en tant que partenaire le deuxième abonné (10.2) sur la base dudit message d'offre (B2),
- - que, si le deuxième abonné (10.2) est sélectionné en tant que partenaire, elle génère un message de réponse (C1), qui annonce une connexion avec le partenaire (10.2) par l'intermédiaire du système de communication (11) aux fins de la transmission du signal radio (F2) reçu par le partenaire (10.2) et l'envoie, à l'aide de la première unité de communication (12.1), au partenaire (10.2),
- - qu'elle établit, à l'aide de la première unité de communication (12.1), la connexion avec le partenaire (10.2),
- - qu'elle achemine le signal radio (F2) transféré au premier récepteur radio (13.1) et lui donne pour instruction de remplacer le signal radio (F1) qu'il a reçu par ce dernier,
- en ce que le deuxième abonné (10.2) comprend en outre
- - une deuxième unité de commande (14.2), qui est couplée à la deuxième unité de communication (12.2) et au deuxième récepteur radio (13.2),
- en ce que la deuxième unité de commande (14.2) est réalisée de telle manière
- qu'elle surveille la deuxième qualité de réception,
- - que, si la deuxième unité de communication (12.2) reçoit du premier abonné (10.1) le message de demande (A1) et si la deuxième qualité de réception est supérieure ou égale à une deuxième valeur de seuil prédéterminée, elle envoie le message d'offre (B2), à l'aide de la deuxième unité de communication (12.2), au premier abonné (10.1),
- - que, si la deuxième unité de communication (12.2) reçoit le message de réponse (C1), elle établit, à l'aide de la deuxième unité de communication (12.2), la connexion avec le premier abonné (10.1) et elle transfère le signal radio (F2) reçu par le deuxième récepteur radio (13.2) au premier abonné (10.2).

2. Système de communication (11) selon la revendication 1,
- la première unité de commande (14.1) étant réalisée de telle manière
- - que, si la première qualité de réception est supérieure ou égale à la première valeur de seuil, elle interrompt, à l'aide de la première unité de communication (12.1), la connexion avec le partenaire (10.2).

3. Système de communication (11) selon la revendication 1 ou 2,
- la première unité de commande (14.1) étant réalisée de telle manière
- - qu'elle met la première valeur de seuil au même niveau de la deuxième qualité de réception.

4. Système de communication (11) selon l'une quelconque des revendications précédentes,
- le message de demande (A1) contenant la première qualité de réception.

5. Système de communication (11) selon la revendication 4,
- la deuxième unité de commande (14.2) étant réalisée de telle manière
- - qu'elle met la deuxième valeur de seuil au même niveau que la première qualité de réception.

6. Système de communication (11) selon l'une quelconque des revendications précédentes,
- la première unité de commande (14.1) étant réalisée de telle manière
- - qu'elle ajoute au message de demande (A1) des informations portant sur le récepteur ou canal employé à l'instant t dans le premier récepteur radio (13.1).

7. Système de communication (11) selon l'une quelconque des revendications précédentes,
- le deuxième abonné (10.2) comprenant en outre
- un autre récepteur radio servant à recevoir des signaux radio, lequel est couplé à la deuxième unité de commande (14.2),
- le message de demande (A1) contenant des informations portant sur un canal souhaité par le premier abonné (10.1),
- la deuxième unité de commande (14.2) étant réalisée de telle manière
- - qu'elle emploie l'autre récepteur radio sur ledit canal ou dans un canal alternatif associé audit canal.

8. Système de communication (11) selon l'une quelconque des revendications précédentes,
- le deuxième abonné (10.2) comprenant en outre
- un appareil de navigation, qui est couplé à la deuxième unité de commande (14.2),
- la deuxième unité de commande (14.2) étant réalisée de telle manière
- - qu'elle détermine, à l'aide de l'appareil de navigation, l'emplacement à l'instant t du deuxième abonné (10.2),
- - qu'elle ajoute au message d'offre (B2) l'emplacement à l'instant t.

9. Système de communication (11) selon l'une quelconque des revendications précédentes,
- le premier abonné (10.1) comprenant en outre
- un appareil de navigation, qui est couplé à la première unité de commande (14.1),
- la première unité de commande (14.1) étant réalisée de telle manière
- - qu'elle détermine, à l'aide de l'appareil de navigation, l'emplacement à l'instant t du premier abonné (10.1),
- - qu'elle ajoute au message de demande (A1) l'emplacement à l'instant t.

10. Abonné (10.1) dans un système de communication de type Car-2-X (11) selon l'une quelconque des revendications 1 à 9, comprenant
- une unité de communication (12.1) servant à recevoir des messages provenant du système de communication (11) et servant à envoyer des messages dans le système de communication (11),
- un récepteur radio (13.1) servant à recevoir des signaux radio,
- une unité de commande (14.1), qui est couplée à l'unité de communication (12.1) et au récepteur radio (13.1),
- l'unité de commande (14.1) étant réalisée de telle manière
- - qu'elle surveille une première qualité de réception d'un signal radio (F1) reçu par le récepteur radio (13.1),
- - que, si la première qualité de réception est inférieure à une valeur de seul prédéterminée, elle génère un message de demande (A1), qui demande une transmission de signaux radio par l'intermédiaire du système de communication (11), et l'envoie, à l'aide de l'unité de communication (12.1), dans le système de communication (11),
- - que, si l'unité de communication (12.1) reçoit d'un autre abonné (10.2) du système de communication (11) un message d'offre (B2), qui contient une deuxième qualité de réception d'un signal radio (F2) reçu par l'autre abonné (10.2), elle sélectionne ou non en tant que partenaire l'autre abonné (10.2) sur la base dudit message d'offre (B2),
- - que, si un partenaire (10.2) est sélectionné, elle génère un message de réponse (C1), qui annonce la connexion avec le partenaire (10.2) par l'intermédiaire du système de communication (11) aux fins de la transmission du signal radio (F2) reçu par le partenaire (10.2) et l'envoie au partenaire (10.2) à l'aide de l'unité de communication (12.1),
- - qu'elle établit, à l'aide de l'unité de communication (12.1), la connexion avec le partenaire (10.2),
- - qu'elle achemine le signal radio (F2) transmis au récepteur radio (13.1) et lui donne pour instruction de remplacer le signal radio (F1) reçu par lui par ce dernier (F2).

11. Abonné (10.2) dans un système de communication de type Car-2-X (11) selon l'une quelconque des revendications 1 à 9, comprenant
- une unité de communication (12.2) servant à recevoir des messages provenant du système de communication (11) et servant à recevoir des messages dans le système de communication (11),
- un récepteur radio (13.2) servant à recevoir des signaux radio,
- une unité de commande (14.2), qui est couplée à l'unité de communication (12.2) et au récepteur radio (13.2),
- l'unité de commande (14) étant réalisée de telle manière
- - qu'elle surveille une qualité de réception d'un signal radio (F2) reçu par le récepteur radio (13.2),
- - que, si l'unité de communication (12.2) reçoit d'un autre abonné (10.1) du système de communication (11) un message de demande (A1), qui demande une transmission de signaux radio par l'intermédiaire du système de communication (11), et si la qualité de réception est supérieure ou égale à une valeur de seuil prédéterminée, elle envoie un message d'offre (B2), qui contient la qualité de réception, à l'aide de l'unité de communication (12.2), à l'autre abonné (10.1),
- - que, si l'unité de communication (12.2) reçoit de l'autre abonné (10.1) un message de réponse (C1), qui annonce une connexion avec l'autre abonné (10.1) par l'intermédiaire du système de communication (11) aux fins de la transmission du signal radio, elle établit, à l'aide de l'unité de communication (12.2), la connexion avec l'autre abonné (10.1) et elle transfère le signal radio (F2) à l'autre abonné (10.1).

12. Procédé servant à recevoir des signaux radio dans un système de communication de type Car-2-X (11),
- le système de communication (11) comprenant au moins deux abonnés (10.1, 10.2),
**caractérisé en ce**
- **que** la première qualité de réception d'un premier signal radio (F1), qui est reçu par un premier abonné (10.1), est surveillée,
- en ce qu'une deuxième qualité de réception d'un deuxième signal radio (F2), qui est reçu par un deuxième abonné (10.2), est surveillée,
- le premier et le deuxième signal radio (F1, F2) étant des signaux de radiodiffusion ou des signaux de téléphonie mobile ou des signaux de navigation par satellite,
- un message de demande (A1), qui demande une transmission de signaux radio par l'intermédiaire du système de communication (11) étant généré et envoyé dans le système de communication (11) si la première qualité de réception est inférieure à une première valeur de seuil prédéterminée,
- un message d'offre (B2), qui contient la deuxième qualité de réception, étant envoyé au premier abonné (10.1) si le message de demande (A1) est reçu et si la deuxième qualité de réception est supérieure ou égale à une deuxième valeur de seuil prédéterminée,
- le deuxième abonné (10.2) étant sélectionné ou non en tant que partenaire sur la base du message d'offre (B2) si ledit message d'offre (B2) est reçu,
- un message de réponse (C1), qui annonce une connexion avec le partenaire (10.2) par l'intermédiaire du système de communication (11) aux fins de la transmission du deuxième signal radio (F2), étant généré et envoyé au partenaire (10.2) si le deuxième abonné (10.2) est sélectionné en tant que partenaire,
- la connexion entre le premier abonné (10.1) et le partenaire (10.2) étant établie et le deuxième signal radio (F2) étant transmis au premier abonné (10.1),
- le premier signal radio (F1) étant remplacé par le deuxième signal radio (F2) transmis pour le premier abonné (10.2).
